# EUROPEAN PATENT SPECIFICATION

(11) **EP 1 748 281 B1**
(45) Date of publication and mention of the grant of the patent: **11.05.2011**
(21) Application number: 06015584.3
(22) Date of filing: 26.07.2006
(51) Int. Cl.: G01C 21/36

(54) **Map generating apparatus**
Kartenerzeugungsgerät
Appareil pour générer des plans

(30) Priority: 27.07.2005 JP 2005216645
(43) Date of publication of application: 31.01.2007
(73) Proprietor: Xanavi Informatics Corporation, Zama-shi, Kanagawa (JP)
(72) Inventor: Asahara, Akinori, c/o Hitachi, Ltd., I.P.G., Chiyoda-ku, Tokyo 100-8220 (JP); Maruyama, Kishiko, c/o Hitachi Ltd., I.P.G., Chiyoda-ku, Tokyo 100-8220 (JP); Sumizawa, Akio, c/o Xanavi Informatics Corp.,, Zama-shi, Kanagawa (JP); Kijima, Shoji, c/o Xanavi Informatics Corp.,, Zama-shi, Kanagawa (JP); Aikawa, Yuko, c/o Xanavi Informatics Corp.,, Zama-shi, Kanagawa (JP)
(74) Representative: MERH-IP Matias Erny Reichl Hoffmann

(56) References cited:
- EP-A- 1 347 269
- US-A1- 2005 216 188

## Description

### BACKGROUND OF THE INVENTION

The present invention relates to a map generating apparatus for displaying a map.

For a summarized display of a road map, there is a technique for improving visibility by shaping the road into a straight line (for example, see JP-A-2004-139485).

Moreover, there is an annular road called a roundabout connecting to a main road to which a vehicle approaches for changing the advance direction at a plurality of points. The roundabout is often seen in Europe.

As the roundabout, there is known one displaying a roundabout pattern and displaying the approaching roads at the periphery of the roundabout. For example, there is a technique for guiding the direction by judging the U-turn direction and right-left judgement, or determination by using the angle of the road approaching the roundabout and the outgoing road, arrangement position, the road name, the change angle of each of links constituting the roundabout, and the road information on the road before and after the approaching road and outgoing road (for example, see JP-A-11-51684). Furthermore, there has been suggested a method for creating a deformed diagram similar to the actual roundabout shape and displaying the display pattern on another screen (for example, see JP-A-2004-108969.

For the point requiring a particular driving operation such as a roundabout, it is better to explicitly indicate that the point is a roundabout rather than showing the actual road shape so that a driver can easily understand the map, which assures safety.

When the point is deformed like the peripheral map as disclosed in JP-A-2004-139485, it is impossible to improve the visibility of the point such as a roundabout.

Moreover, the apparatus disclosed in JP-A-1151684 and JP-A-2004-108969 displays only the road approaching the pattern besides the pattern of the roundabout, i.e., displays the shape similar to the actual shape and cannot simultaneously display the peripheral map wider than that.

The apparatus and the method mentioned in the EP 1 347 269 A1 relates to a navigation machine which extracts link data of a roundabout from a road map data when a moving body is entering the roundabout. The navigation machine detects a route entering the roundabout, a centre of the roundabout, and an exiting route based on the link data to determine an angle of the exiting route with respect to the entering route. A direction mark having the exiting route angle is prepared as a heading direction guidance image.

### SUMMARY OF THE INVENTION

The representative invention among the inventions disclosed in the present application can be outlined as follows. A map generating apparatus of the present invention extracts a patterned ground object, or a patterned feature from stored map data and/or inserts a pattern stored in advance into the map data instead of the patterned ground object. Moreover, the map data is displayed on a single screen.
According to the present invention, a shape which can be replaced by a pattern such as a roundabout is replaced by a pattern so that the map can be easily viewed. Moreover, it is possible to display it on a single screen without causing a contradiction with the peripheral map.
The above-mentioned features may be combined in any way, partly or as a whole.

### BRIEF DESCRIPTION OF THE DRAWINGS

Fig. 1 shows the entire car navigation system according to an embodiment of the present invention.
Fig. 2 shows a case when an intersection is displayed in a close-up image.
Figs. 3A and 3B show an intersection in a close-up image.
Fig. 4 shows an close-up intersection image generation process according to an embodiment of the present application.
Fig. 5 shows an example of a map summarization process flow according to Embodiment 1.
Figs. 6A to 6C show an example of the pattern judgment processing method.
Figs. 7A to 7C show an example of the pattern insertion method by the point shift.
Figs. 8A and 8B show an example of display result by Embodiment 1.
Figs. 9A to 9D show an example of the pattern insertion processing method by the intersection according to Embodiment 2.
Fig. 10 shows an example of close-up intersection image shaping process according to Embodiment 3.
Figs. 11A to 11C show an example of a variable translation for performing a point shift on the roundabout pattern.
Figs. 12A to 12B show an example of display result by Embodiment 3.
Figs. 13A and 13B show an example of pattern insertion at the 3-dimensional intersection.

### DESCRIPTION OF THE EMBODIMENTS

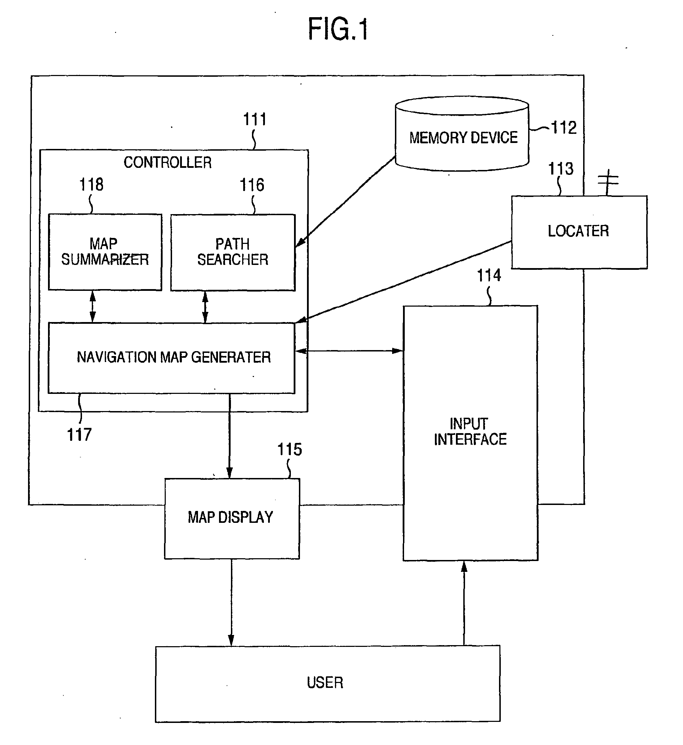

Fig. 1 shows an on-vehicle navigation device as an embodiment for carrying out the present invention. The present embodiment is characterized in that when the on-vehicle navigation performs a navigation along a search path , a close-up image shaped in advance is displayed so that a user can easily understand the navigation in the advance direction.

The present device has configuration as follows, i.e., includes: an input interface (114) for inputting a user instruction such as a touch panel and a switch; a memory device (112) for storing map data such as a DVD; a locator (113) for acquiring the current position of the vehicle by using the GPS or the like; a controller (111) formed by a processor, a memory, and the like; and a map display (115) such as a liquid crystal display. When a user of the device inputs a destination via the input interface (114), the controller (111) of the device searches for a path from the current position acquired by the current position measurement unit to the destination in a path search process unit (116) and generates a navigation image in a navigation map generator (117). The navigation map is summarized by a map summarization unit (118) and the result is displayed on the map display (115) for guiding the path .

The map data contains information constituting a map such as a segment indicating a road, its network structure, a location of a coastline, a location name, and other background data. The map data is acquired from the memory device of the device or from an external computer at the destination of the network. In general, the road data is recorded as a segment from one intersection to another intersection. The segment string is called a link. The intersection between links is called a node. The road shape is expressed by a link and a node. It should be noted that the map data used in this embodiment is an example. The present invention can be applied if the data can be deformed into vector data like in the case having shape data on the close-up intersection image.

The map display is a device capable of displaying an image such as a liquid crystal display. It should be noted that by arranging a touch sensor on the display, it can serve also as the input interface. Moreover, the map display has a temporary memory device for storing a display image. By writing a display image there, it is possible to display an image.

The controller is a general-purpose computer and performs a process including reception of an input, search for a path, and generation of a map image. However, it is also possible to use configuration in which a process is distributed between a plurality of computers connected to one another so as to increase the processing speed. It should be noted that the computer including the controller may be a server at a remote place and connected to the other part via a network. In this case, it is possible to perform a process by a high-performance computer, which enables a sophisticated process.

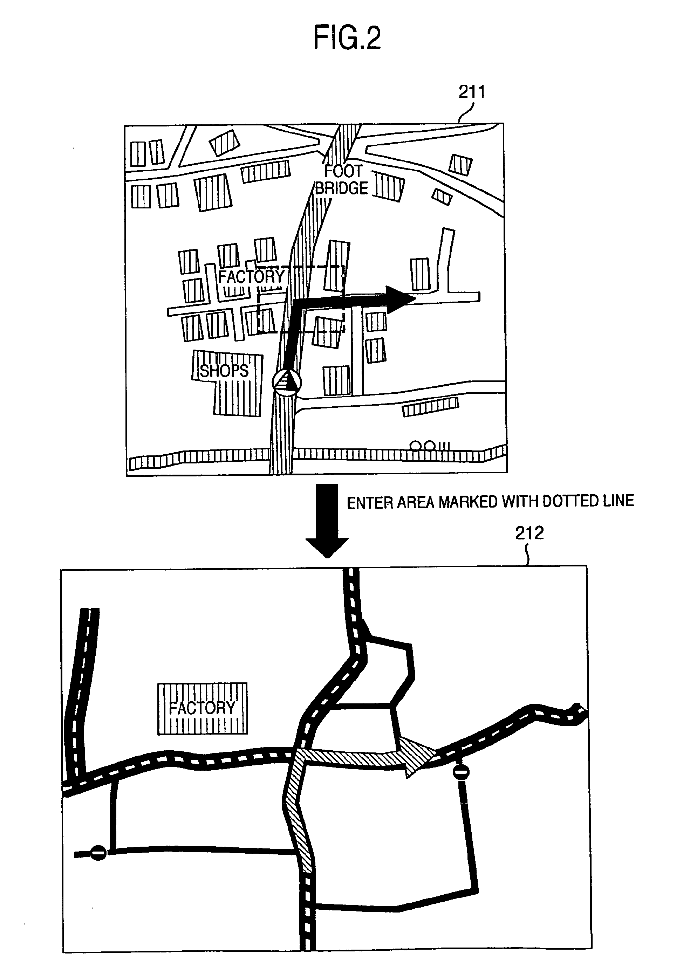

When a user inputs a destination by operating the input unit in the device, a path from the current position acquired by the locator (113) to the destination is searched and a navigation image along the search result is displayed on the map display for navigation. This road navigation procedure is started by displaying a road navigation indicating the current position and the path along which the user should advance on a road map as shown in Fig. 2A (211). When the user approaches an intersection, the roads in the vicinity of the intersection are enlarged and display as shown in Fig. 2B (212) appears. In this application, the close-up image (212) is called a close-up intersection image.

A map includes a location having characteristic shape such as a roundabout requiring a predetermined operation of a driver and serving as a landmark. In this application, such a location is called a patterned ground object. The patterned ground object has a shape similar to a typical pattern such as a straight line and a circle. The ground object can be recognized easier when explicitly expressed as the pattern shape. Moreover, this includes those which are recognized as patterned ones requiring a predetermined driving operation. For example, by patterning ground objects serving as landmarks such as a roundabout requiring a certain driving operation, a special road such as a side road and a ramp road, and an annular railway recognized as a certain pattern, it is possible to attract an attention of the user. These objects should be explicitly displayed as points for which attention is to be paid.

According to the present invention, when displaying a map in a navigation device, a patterned ground object is replaced by a pattern shape so that a displayed patterned ground object can easily be understood. Moreover, a patterned ground object is replaced by a pattern which is stored in advance, i.e., the pattern is inserted into the map data and the map data is displayed on a single screen, so that the user can easily grasp the positional relationship between the patterned ground object and the pattern from the linkage with the peripheral roads. Furthermore, it is possible to improve visibility of the pattern on the map. In this embodiment, as an example of the patterned ground object, a roundabout is replaced by a patterned shape. It should be noted that this is only an example. A roundabout can be replaced by a plurality of patterns. An arbitrary patterned ground object which can be easily recognized by replacement can be replaced by a pattern.

### [Embodiment 1]

Embodiment 1 enables a user to easily understand display of a roundabout by inserting a pattern shape corresponding to the roundabout into the close-up intersection image. In the case of the roundabout, after advancing into the roundabout, shift only in one direction is allowed. Accordingly, the pattern shape is preferably a closed convex diagram expressing the circular road. The closed convex diagram may be, for example, a circular shape, an elliptical shape, or, depending on the shape of the roundabout, a track course type, a rectangular shape, a square; a hemisphere, a gourd shape, water drop shape, and others. It is possible to select and use a pattern of the type sufficient for distinguishing the shape of the roundabout.

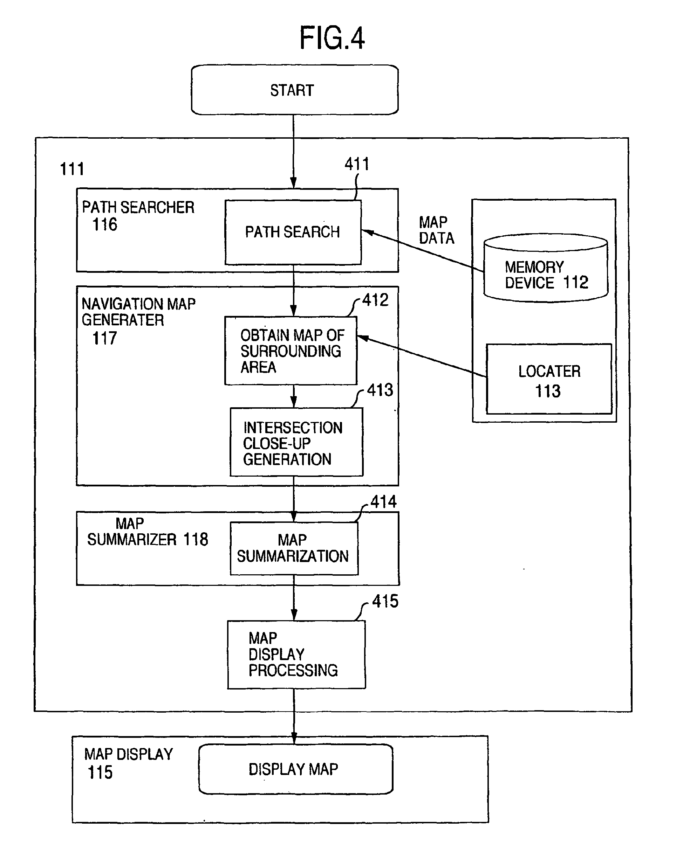

Fig. 4 shows a flowchart for creating an close-up intersection image in the Embodiment 1. Creation of a close-up intersection image is executed upon completion of a path search process (411) and when a close-up intersection image required for navigation is decided. Thus, even if a long calculation time is required for shaping, it is possible to reduce the apparent time required for display. Moreover, in order to eliminate an unnecessary process, the creation may be executed at the moment when the vehicle enters the intersection or an area at a predetermined distance from the roundabout.

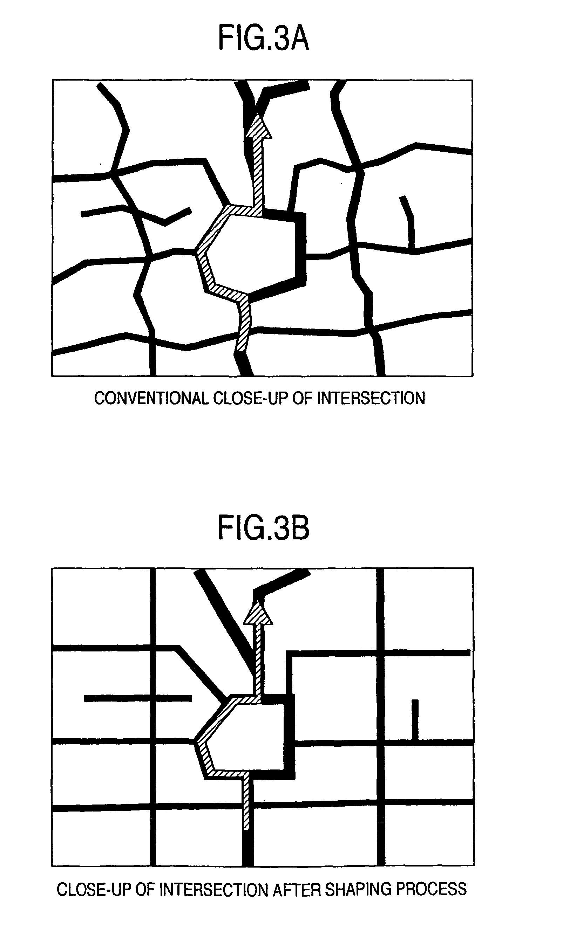

The path search process unit (116) searches for the path navigated by the path search process (411) and makes a decision. The navigation map generator (117) acquires a peripheral map of the intersection (intersection to be navigated) requiring a navigation for turning right or left on the path (412) and extracts a map of a predetermined range in the vicinity of the intersection from the peripheral map to perform creation of a close-up intersection image (413), thereby creating a close-up intersection image (Fig. 3A). The close-up intersection image (Fig. 3A) created at this moment is complicated since the shape of the roundabout is displayed as it is and it is difficult to understand that the map shows a roundabout.

Next, the created close-up intersection image is shaped by the map summarization (414) of the map summarization unit (118) so as to be a close-up intersection image which can easily be understood. Lastly, the map is converted into an image which can be displayed on the screen by the map display process (415) and presented to the user via the map display (115).

It should be noted that the map summarization (414) in this application can be applied not only to the close-up intersection image but also to a map containing a patterned ground object so that the map can easily be understood. Especially the patterned ground object on the driving path such as a roundabout in the close-up intersection image, the display is effective because it attracts attention of the driver.

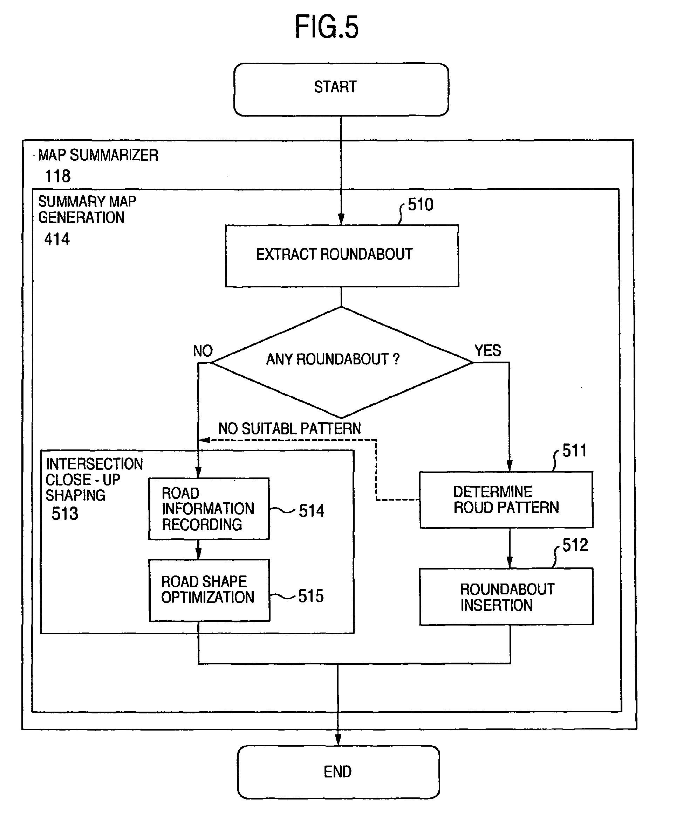

Fig. 5 is an example of a flow of the map summarization. Firstly, each roundabout information is extracted by the roundabout extraction process (510). This process can be performed at a high speed by extracting ones having the roundabout attribute from the map data. If no attribute can be found in the data, it is possible to judge that the portion is a roundabout from the condition peculiar to the roundabout such as a one-way traffic to make a circle. After the roundabout is extracted, the process is branched depending on whether a roundabout has been found.

Firstly, explanation will be given when a roundabout has been found. When a roundabout is found, a roundabout pattern judgment process (511) is executed to decide a roundabout replacing pattern shape. This process extracts a road having the roundabout attribute from the map data and decides a replacement pattern according to it. After this, a roundabout insertion process (512) is executed to insert a pattern. It should be noted that if no suitable pattern can be found in the pattern judgment process, it is possible to eliminate this process and execute another process such as road shape optimization process (515).

Next, explanation will be given on the case when no roundabout has been found. When no roundabout exists, no roundabout to be recognized exists and the map may be displayed as it is. However, in this case also, it is possible to execute the close-up intersection image shaping process (513) for promoting the understanding of the road shape. The close-up intersection image shaping process (513) used here performs the road information recording process (514) and the road shape optimization process (515) employing the technique disclosed, for example, in JP-A-2004-139485.

The road information recording process (514) records shape information on an ordinary road, shape information recognized as a characteristic by the user such as a road parallel to the main road or a curved road, road attributes such as a high-way and roundabout, and the like. These information may be acquired by arbitrary means such as information recorded in the map data, a measurement result of the angle between roads, information acquired from outside via a network, and the like.

The road shape optimization process (515) decides a road shape serving as a landmark from information on the respective roads recorded here and deforms it to an optimal shape. This enables optimal display in accordance with the use. The road shape optimization process (515) acquires an optimal road shape by calculating an argument which minimizes the evaluation function expressing the shaped degree of the road data. The evaluation function can be differentiated with the coordinate value at each point of the road as an argument and becomes smaller as the road approaches the target shape. For example, when the target shape is obtained by two roads intersecting at 90 degrees, it is a square sum of (angle between all the roads - 90 degrees). The argument to minimize this evaluation function is calculated and the argument is converted again into the coordinate value of the road, thereby simplifying a complicated map and calculating a easily-visible road shape. For this calculation, it is possible to use known high-speed function minimum value calculation methods such as the quasi-Newton method and the conjugate gradient method for displaying a map shaped in a short time.

It should be noted that if the close-up intersection image shaping process (513) is executed in any case without executing the roundabout insert process (512), the close-up intersection image (Fig. 3A) becomes the map in Fig. 3B. This deformation process enables a user to easily understand the roads. However, in this technique, the roundabout is handled in the same way as the ordinary road and the roundabout cannot be displayed as a circle. Moreover, the roads forming a characteristic shape such as a square or a trapezoid may be deformed into a shape disabling the user to recognize the original shape, which may cause misunderstanding. In contrast to this, the present invention eliminates such a misunderstanding by the roundabout extraction process (510).

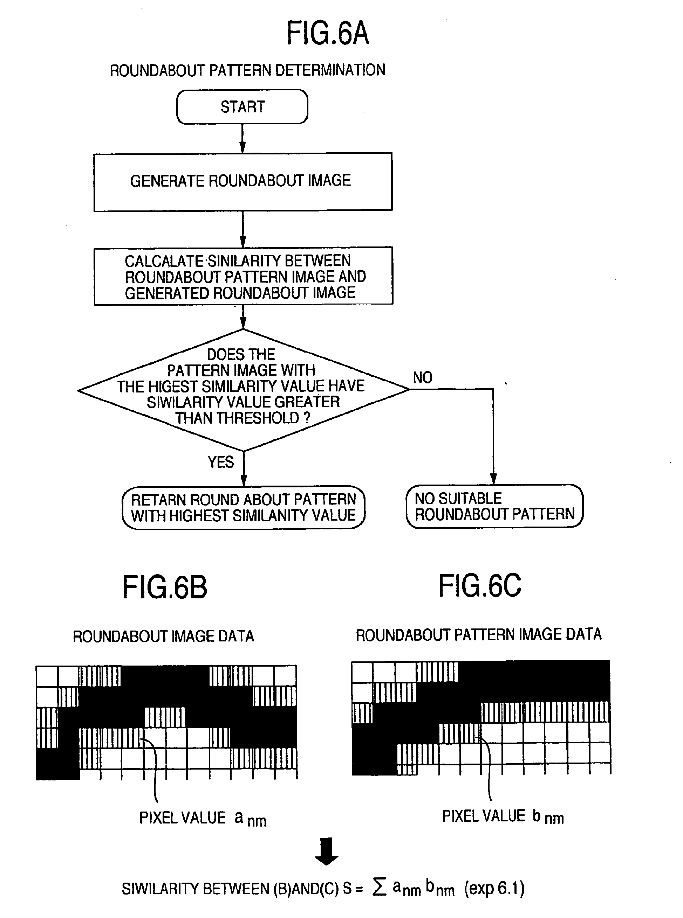

Fig. 6A shows a flow of the pattern judgment process (511) according to an embodiment which is a characteristic of this application. This process creates roundabout image data (Fig. 6B) expressing a roundabout road shape, superimposes it on pattern image data (Fig. 6C) prepared in advance to correlate the respective patterns, and calculates the similarity between them. The roundabout image data (Fig. 6B) is created by virtually displaying the road extracted by the roundabout extraction process (510) as an image. After this, multiplication between the pixels of the roundabout image data (Fig. 6B) and the pattern image data (Fig. 6C) is executed. The sum S of the respective values (Expression 6.1 in Fig. 6) is the similarity. The similarity is calculated for each of the patterns and the pattern having the greatest similarity is used as an insert pattern. It should be noted that the pattern image and the insert pattern used here may be an ordinary convex shape and accordingly, it is possible to use a shape pattern similar to the original shape of each roundabout. It is also possible to correlate a roundabout with a pattern based on the type of the patterned ground object such as a circle and an ellipse without executing the pattern judgment process. Thus, it is possible to grasp the pattern corresponding to each patterned ground object in advance, this further improves visibility. Moreover, this correlation may be performed for each of the roundabout instead of the type. For example, this is helpful when the road shape is usually recognized as a gourd shape and cannot be expressed by a single type of shape. Moreover, by inputting the pattern image data and the pattern template, it is possible to add afterwards if necessary.

Here, by providing a threshold value for the sum of the pixel values of the superimposed images, it is possible to detect a state that no pattern is matched and the pattern insert is not executed. Moreover, when no pattern judgment is performed and a pattern to replace a roundabout is determined in advance, it is also possible to provide a threshold value as has bee described above and execute no pattern insert. In this case, the display may be executed directly as has been described above or the entire display may be deformed uniformly. Moreover, when the original shape is a convex shape, it can be used directly as a pattern while shaping the peripheral roads without destroying the roundabout from the original shape. Thus, dynamic processing can be performed. Furthermore, the processing may be performed rapidly since the processing may be performed only by using integer calculations. It also has an advantage that it is possible to use a device such as a typical image processing board. It should be noted that this only an example and any method may be used if it enables quantitative judgment of similarity between the pattern shape and the vector data on the map. A combination of different methods may also be used. For example, if function approximation is performed and the square error is judged as similarity, judgment may be performed by the total of the similarities of the two methods, thereby obtaining more accurate judgment.

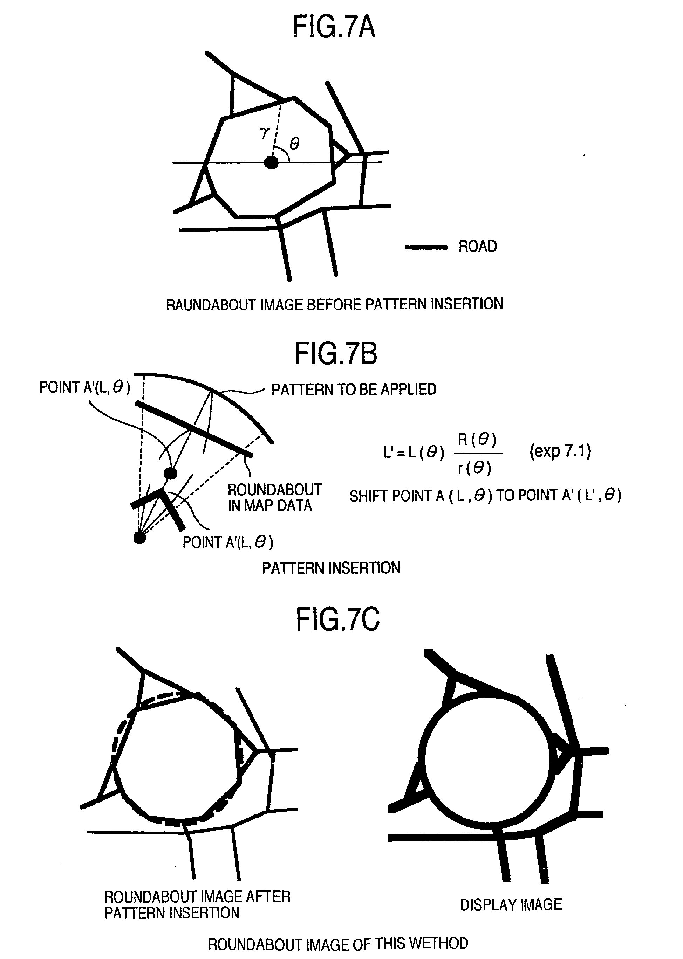

Fig. 7 shows a roundabout insert process (512) according to an embodiment. In this embodiment, as shown in Fig. 7A, a roundabout and peripheral (approaching) roads are shown by polar coordinates having an origin which is the center of the roundabout. When the scale is modified in the radial direction by the conversion of (Expression 7.1): (L,θ) → (L',θ), the point on the roundabout can be shifted to the pattern without causing an intersection between the roads in the roundabout and peripheral roads. When the number of interpolation points is small, there is an exception that an intersection is caused. In such a case, it is possible to eliminate the intersection by adding an interpolation point. It should be noted that in this invention, the scale modification range is limited to a certain distance range. This suppresses the deformation of the peripheral roads and enables display corresponding to a plurality of shaping without causing an unnecessary road intersection even when a road exists inside the roundabout or a peripheral road is in the proximity of the roundabout. This scale modification shifts the point on the roundabout onto the pattern like in Fig. 7B. When this is displayed on a screen, the segment constituting the roundabout is not displayed and a pattern is displayed instead. Thus, it is possible to display the pattern without contradiction with the peripheral roads like in Fig. 7C. It should be noted that this pattern insertion method is only an example. Any method may be used if it can shift points on the roundabout onto the pattern without causing an intersection with a peripheral road. Since no processing other than shift of points on the road is performed, it is possible to handle the road map in the same way as the conventional road map even if pattern display is performed.

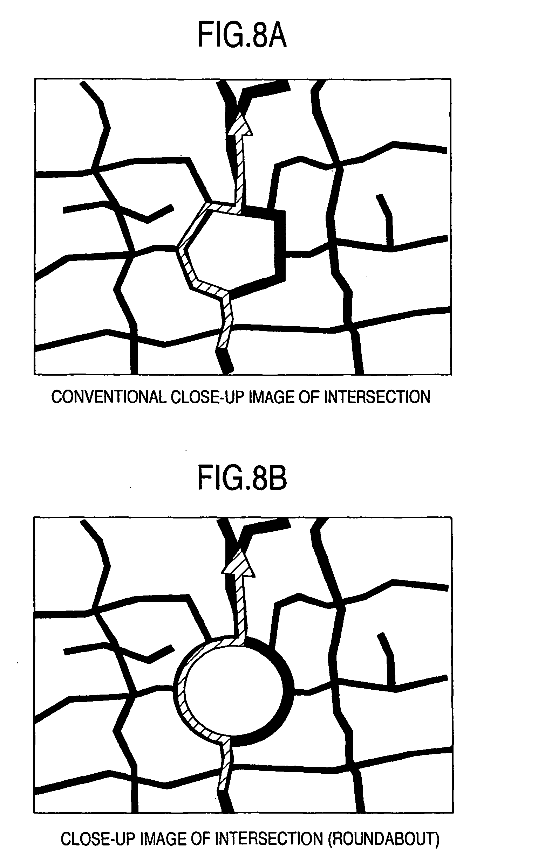

Fig. 8 shows a process result by Embodiment 1. In the conventional close-up intersection image (Fig. 8A), it is difficult to distinguish a roundabout from the peripheral roads while in the result (Fig. 8B) of Embodiment 1, the roundabout is displayed as a circular pattern. If the driver has a knowledge that a roundabout is a circle, he/she can easily find the existence of a roundabout. Moreover, when executing a function to shift a car mark on the road or display congestion information, it is necessary to assign an identifier to each road. However, in the present embodiment, only the shift of the characteristic points of the road is performed and the image can be handled in the same way as the conventional map without adding a special processing.

### [Embodiment 2]

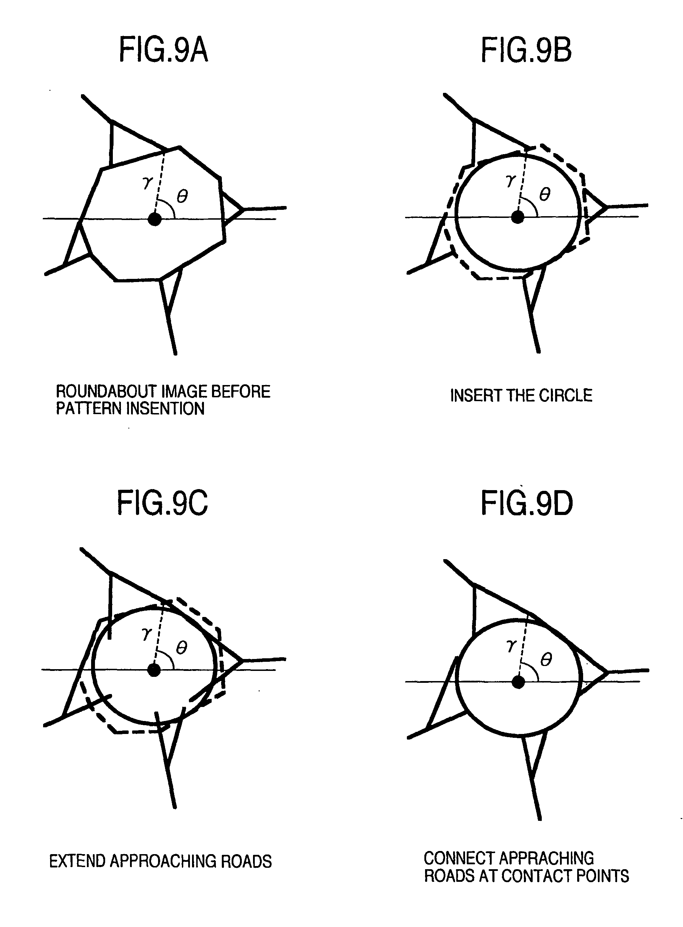

Embodiment 2 provides another roundabout pattern insertion method for the roundabout insertion process (512). In Embodiment 2, when inserting a pattern, contraction calculation is performed so as to make the pattern an inscribed image of the roundabout data. Fig. 9 shows the Embodiment 2. Firstly, in the roundabout (Fig. 9A) before replacement, the roundabout pattern image is created inside the roundabout (Fig. 9B). When the pattern is a circle, the circle is inscribed with the road at the smallest distance from the center of the roundabout. When the pattern has other shapes, calculation can be easily performed. Next, the roads coming into the roundabout are extended (Fig. 9C). In the Embodiment 2, segments connected to the roundabout are directly extended. However, it is also possible to extend the segments in the radial direction of the roundabout, for example. Any segment extension method can be used if the extension brings about an intersection with the roundabout. Next, the intersection with the roundabout is calculated and a link is connected there (Fig. 9D). Here, for the road which has no intersection with the roundabout, the road is bent in the radial direction at the point at the smallest distance from the roundabout, thereby guaranteeing the connection. This method has an advantage that the processing speed is high as compared to the Embodiment 1. However, a trouble arises when a road exists inside the roundabout. Accordingly, when the roundabout has a line inside, it is preferable that another flag be attached so as to switch to the insertion method of the Embodiment 1. When the Embodiment 2 can be used, the roundabout pattern can be inserted with comparatively small distortion of the peripheral roads.

### [Embodiment 3]

Embodiment 3 provides a device for adding a shaping process after inserting a roundabout pattern. The pattern may also be displayed directly without performing shaping. However, the roundabout insertion process performs deformation so that no intersection is caused with a peripheral road, the shape of the peripheral road may be distorted. The distortion may be eliminated by adding the shaping process.

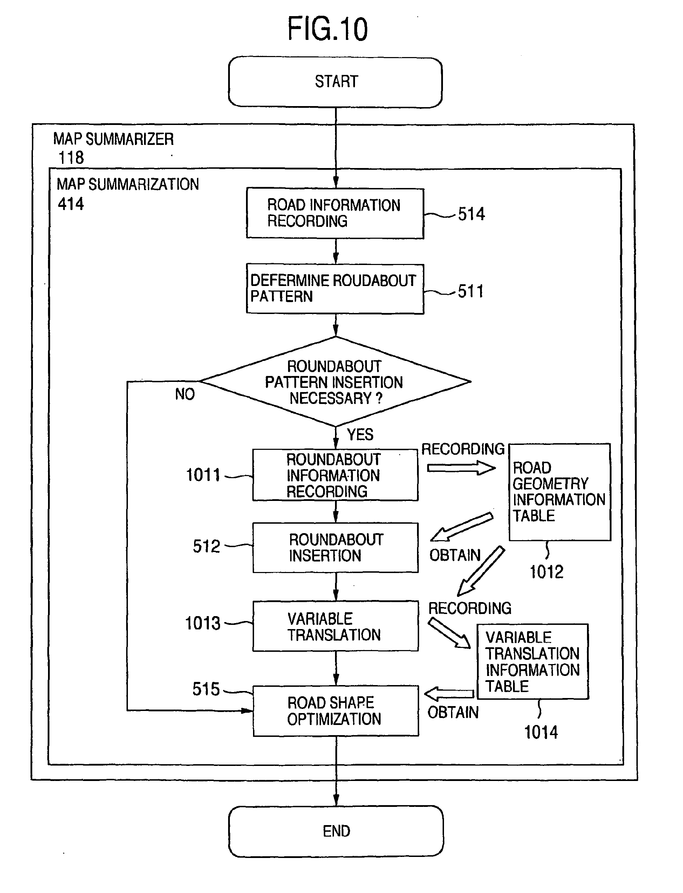

Fig. 10 shows the Embodiment 3. In the prior art (JP-A-2004-139485), an argument to minimize the evaluation function using the road coordinates as an argument is calculated and the argument is converted into the road coordinates for performing shaping. When shaping is performed by this prior art for eliminating the distortion caused by the pattern insertion, there arises a problem that the points constituting the patterned ground object go out of the pattern. To cope with this, in this embodiment, optimization is performed with limitation that the points constituting the patterned ground object on the pattern are on the pattern.

Explanation will be given on the flow of Fig. 10. Firstly, a road information recording process (514) is executed and then a roundabout pattern judgment process (511) is performed. When a pattern shape to be inserted exists, a roundabout pattern information recording process (1011) records the pattern shape information in a road shape information recording table (1012). What is recorded here includes information indicating the position of the center of the roundabout pattern to which the roads belong, and shape information such as the pattern type and radius. According to them, the roundabout insertion process (512) is performed, and points on the roundabout are shifted onto the pattern shape.

A variable translation (1013) creates a table for converting the road coordinates into an argument of the evaluation function. In the prior art, the road coordinates are directly used as an argument. In this embodiment, variables of the points on the roundabout pattern are converted so that the shift range is limited onto the pattern. A variable translation information table (1014) records the correspondence. However, when the pattern shape is not inserted into the roundabout, no variable translation is performed. This variable translation table is initialized by "no conversion is to be performed" and operates even when no variable translation is executed, so that the process is shared.

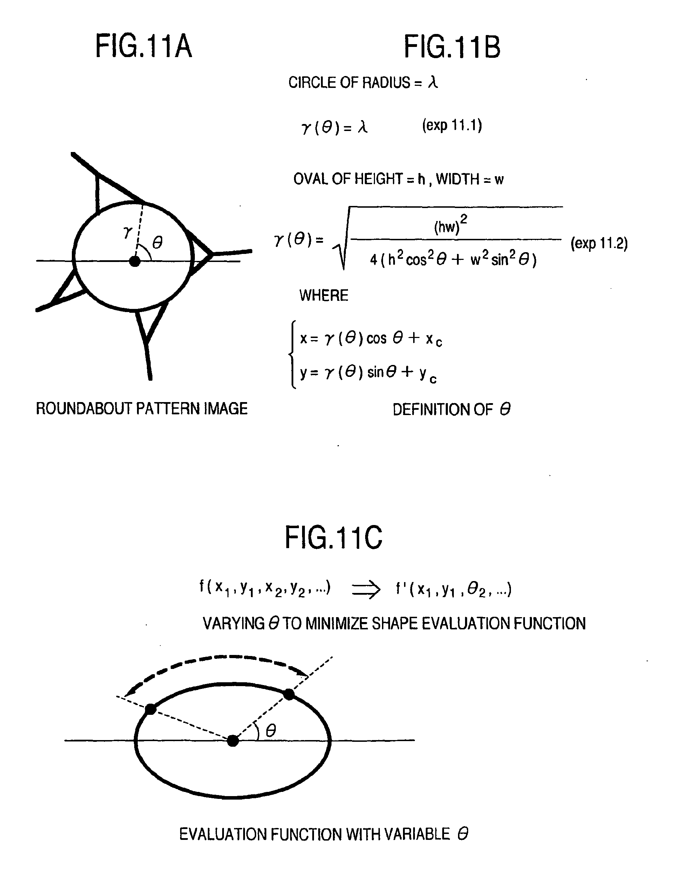

The Embodiment 3 is characterized in that the argument of the evaluation function is calculated from the road coordinates. Fig. 11 shows this variable translation (1013). The points on the roundabout have been already shifted onto the pattern (Fig. 11A). When the points on the pattern are expressed by a polar coordinate (Fig. 11B) having an origin at the central point of the pattern, a radial direction component r at an arbitrary point on the pattern can be written as a function of an argument θ. For example, if the pattern is a circle, then (Expression 11.1). If the pattern is an ellipse, then (Expression 11.2). When the argument used in the evaluation function is this polar coordinate system (r, θ) for the points on the roundabout, the evaluation function f can be made to a function f' in which the point coordinate on the roundabout has only θ not depending on the point coordinate (Fig. 11C). An argument to minimize this evaluation function f' is obtained and the road coordinate is calculated from it. Thus, the points on the roundabout are always on the pattern. This enables shaping to the road shape while displaying the pattern. However, the coordinate system used here is only an example and it is possible to make a limit by using another particular coordinate system. It should be noted that in the Embodiment 3, the connection point between the roundabout and the approaching road is shifted but it is also possible to change the radius and the center coordinates of the roundabout in the same method.

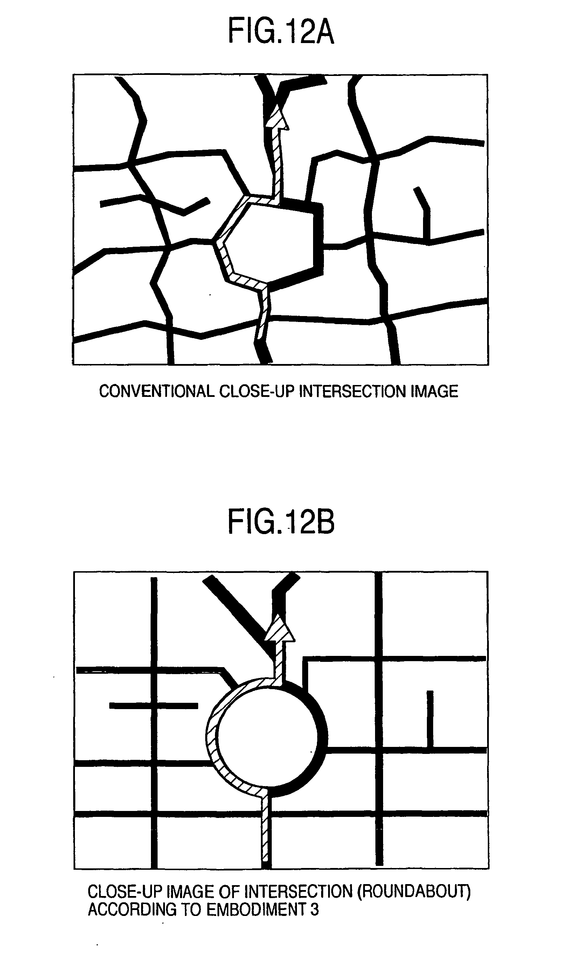

The Embodiment 3 enables display as shown in Fig. 12. In the conventional close-up intersection image (Fig. 12A), it is difficult to understand the existence of the roundabout and the state of peripheral roads. For example, when the technique of JP-A-2004-139485 is used, the peripheral roads are shaped and they are easily understood but the roundabout goes out of the pattern and cannot be easily found. On the contrary, in this embodiment (Fig. 12B), the roundabout is replaced by a pattern while shaping the peripheral roads, and it is easy to recognize the existence of the roundabout.

As has been described above, the present invention has the following advantages:
(1) It is easy to recognize that the intersection the driver approaching is a roundabout.
(2) It is easy to understand the shape of the roundabout, i.e., from where the driver should go into the roundabout and from where the driver goes out of the roundabout.

In the Embodiments 1, 2, 3, a roundabout is detected according to the information described in the road data and it is replaced by a pattern for deformation. However, as has been already described, the present invention may be applied to a pattered ground shape other than the roundabout. For example, when a road shape is scanned and an annular pattern is found, it can be replaced by a pattern.

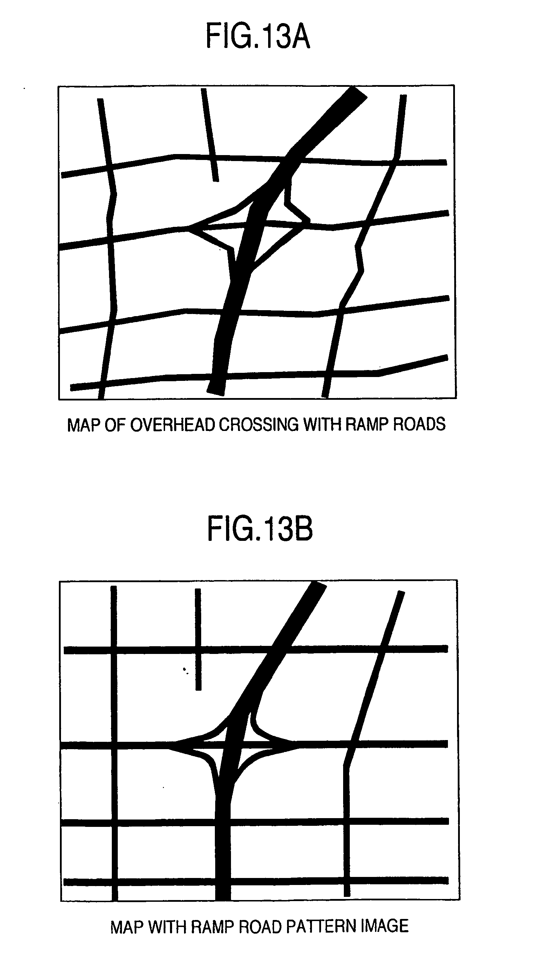

For example, by replacing the ramp road (Fig. 13A) by a pattern having a quadratic curve, the similar effect can be obtained. In the case of a ramp road branched from an overhead road, a quadratic curve passing through the branching point is created by the least square approximation, and the quadratic curve is inserted so as to explicitly indicate that the road is a ramp road (Fig. 13B). Alternatively, from a railway image information, it is possible to detect an annular line and judge whether it is to be displayed by a circle by using the present invention. If yes, it can be replaced by the circle. Thus, the present invention enables display of a patterned ground object not only a roundabout but also other object as a pattern which enables a driver to easily understand the object image.

It should be further understood by those skilled in the art that although the foregoing description has been made on embodiments of the invention, the invention is not limited thereto and various changes and modifications may be made without departing from the scope of the appended claims.
The above-mentioned features and embodiments can be combined in any way, partly or as a whole.

## Claims

1. A map generating apparatus comprising:
a memory device (112) for storing map data;
**characterized by**
a map summarizer (118) adapted to extract a patterned ground object from the map data and to insert a pattern stored in advance into the map data to replace the extracted patterned ground object,
wherein the patterned ground object is an object having a characteristic shape requiring a predetermined operation of a driver and serving as a landmark; and
a map display (115) for displaying the map data into which the pattern has been inserted on a single screen.

2. The map generating apparatus as claimed in claim 1, wherein the map summarizer (118) is adapted to perform the insertion by using a pattern corresponding to the extracted patterned ground object.

3. The map generating apparatus as claimed in claim 1 or 2, wherein the map summarizer (118) is adapted to calculate similarity between the patterned ground object image data and the patterned image data and performing the insertion by using the pattern having the greatest similarity.

4. The map generating apparatus as claimed in at least one of claims 1 to 3, wherein the map summarizer (118) is adapted to calculate a scale for shifting points constituting the patterned ground object of the map data onto the pattern to be inserted and to locally change the scale of the map data by using the calculated scale when performing the pattern insertion.

5. The map generating apparatus as claimed in at least one of claims 1 to 4, wherein the map summarizer (118) is adapted to calculate a scale for making the pattern to be an inscribed figure of the patterned ground object and to perform the insertion by using the pattern modified to the calculated scale.

6. The map generating apparatus as claimed in at least one of claims 1 to 5, wherein the map summarizer (118 ) is adapted to judge whether a pattern to be inserted to replace the extracted patterned ground object exists and does not perform the pattern insertion if no pattern suitable for the patterned ground object exists.

7. The map generating apparatus as claimed in at least one of claims 1 to 6, wherein the map summarizer (118) is adapted to execute, after the patterned ground object extraction, a road shape optimization process (515) for the map data into which the pattern has been inserted.

8. The generating apparatus as claimed in at least one of claims 1 to 7, wherein when a pattern to be inserted to replace the patterned ground object exists, the road shape optimization process (515) limits the shift range of the points constituting the patterned shape ground object onto the pattern and shapes a road shape for the map data into which the pattern has been inserted.

9. The map generating apparatus as claimed in at least one of claims 1 to 8, further comprising an input interface capable of receiving input of the pattern image data and a template of the pattern serving as a candidate to be inserted to replace the patterned ground object and adding the pattern image data and the pattern.

10. The map generating apparatus as claimed in at least one of claims 1 to 9, wherein the patterned ground object is at least one of a roundabout, an annular railway and road, a byway, and a ramp road.

11. The map generating apparatus as claimed in at least one of claims 1 to 10, wherein when the patterned ground object is a roundabout, another go-around shape such as a circle, an ellipse, or a square is used as the pattern.

12. A map generating apparatus according to claim 1, further comprising: a locator (113) for acquiring a current position;
a path searcher (116) for searching for a path from the current position acquired by the locator (113) to a destination; and
a navigation map generating unit (117) for generating a navigation image by using the search path obtained by the path searcher (116);
said path searcher (116), said navigation map generating unit (117) and said map summarizer (118) being arranged within a controller (111);
wherein said map summarizer (118) is arranged to detect said patterned ground object contained in the navigation image generated by the navigation map generating unit (117) and to execute a pattern insertion process.

13. The map generating apparatus according to claim 12, wherein the controller (111) including the path searcher (116), the navigation map generator (117) and the map summarizer (118) is located at a remote place and is connected to the other units of the map generating apparatus via a network; and
wherein the map data containing a map summarized by the map summarizer (118) is transmitted to the map display (115) via the network.

## Patentansprüche

1. Kartenerzeugungsgerät mit:
einer Speichervorrichtung (112) zum Speichern von Kartendaten;
**gekennzeichnet durch**
eine Kartenzusammenfassungsvorrichtung (118), die dazu ausgelegt ist, ein gemustertes Bodenobjekt aus den Kartendaten zu extrahieren und ein vorab gespeichertes Muster in die Kartendaten einzufügen, um das extrahierte gemusterte Bodenobjekt zu ersetzen,
wobei das gemusterte Bodenobjekt ein Objekt mit einer charakteristischen Form ist, die eine vorbestimmte Handlung eines Fahrers erfordert und als Orientierungshilfe dient; und
eine Kartenanzeigevorrichtung (115) zum Anzeigen der Kartendaten, in die das Muster eingefügt worden ist, auf einem einzelnen Bildschirm.

2. Kartenerzeugungsgerät nach Anspruch 1, wobei die Kartenzusammenfassungsvorrichtung (118) dazu ausgelegt ist, die Einfügung unter Verwendung eines Musters durchzuführen, das dem extrahierten gemusterten Bodenobjekt entspricht.

3. Kartenerzeugungsgerät nach Anspruch 1 oder 2, wobei die Kartenzusammenfassungsvorrichtung (118) dazu ausgelegt ist, eine Ähnlichkeit zwischen den Gemustertes-Bodenobjekt-Bilddaten und den gemusterten Bilddaten zu berechnen und die Einfügung unter Verwendung des Musters, das die größte Ähnlichkeit besitzt, durchzuführen.

4. Kartenerzeugungsgerät nach zumindest einem der Ansprüche 1 bis 3, wobei die Kartenzusammenfassungsvorrichtung (118) dazu ausgelegt ist, einen Maßstab zum Verschieben von Punkten, die das gemusterte Bodenobjekt der Kartendaten bilden, auf das einzufügende Muster zu berechnen und den Maßstab der Kartendaten unter Verwendung des berechnen Maßstabs lokal zu ändern, wenn die Mustereinfügung durchgeführt wird.

5. Kartenerzeugungsgerät nach zumindest einem der Ansprüche 1 bis 4, wobei die Kartenzusammenfassungsvorrichtung (118) dazu ausgelegt ist, einen Maßstab zu berechnen, um das Muster zu einer einbeschriebenen Figur des gemusterten Bodenobjekts zu machen und die Einfügung unter Verwendung des auf den berechneten Maßstab abgewandelten Musters durchzuführen.

6. Kartenerzeugungsgerät nach zumindest einem der Ansprüche 1 bis 5, wobei die Kartenzusammenfassungsvorrichtung (118) dazu ausgelegt ist, zu beurteilen, ob ein einzufügendes Muster zum Ersetzen des extrahierten gemusterten Bodenobjekts vorhanden ist, und die Mustereinfügung nicht durchführt, wenn kein Muster vorhanden ist, das für das gemusterte Bodenobjekt geeignet ist.

7. Kartenerzeugungsgerät nach zumindest einem der Ansprüche 1 bis 6, wobei die Kartenzusammenfassungsvorrichtung (118) dazu ausgelegt ist, nach der Extrahierung des gemusterten Bodenobjekts einen Straßenform-Optimierungsvorgang (515) für die Kartendaten auszuführen, in die das Muster eingefügt worden ist.

8. Kartenerzeugungsgerät nach zumindest einem der Ansprüche 1 bis 7, wobei, wenn ein Muster vorhanden ist, das zum Ersetzen des gemusterten Bodenobjekts eingefügt werden soll, der Straßenform-Optimierungsvorgang (515) den Verschiebungsbereich der Punkte, die das Bodenobjekt mit gemusterter Form bilden, auf das Muster beschränkt und eine Straßenform für die Kartendaten formt, in die das Muster eingefügt worden ist.

9. Kartenerzeugungsgerät nach zumindest einem der Ansprüche 1 bis 8, weiterhin mit einer Eingabeschnittstelle, die dazu imstande ist, eine Eingabe der Musterbilddaten und eine Schablone des Musters zu empfangen, die als einzufügender Kandidat zum Ersetzen des gemusterten Bodenobjekts dient, und die Musterbilddaten und das Muster hinzuzufügen.

10. Kartenerzeugungsgerät nach zumindest einem der Ansprüche 1 bis 9, wobei das gemusterte Bodenobjekt von einem Kreisverkehr, einem ringförmigen Schienenweg und Straße, einer Nebenstraße und einer Auffahrtsstraße zumindest eines ist.

11. Kartenerzeugungsgerät nach zumindest einem der Ansprüche 1 bis 10, wobei, wenn das gemusterte Bodenobjekt ein Kreisverkehr ist, eine andere Umfahrungsform wie etwa ein Kreis, eine Ellipse oder ein Quadrat als das Muster verwendet wird.

12. Kartenerzeugungsgerät nach Anspruch 1, weiterhin mit: einem Positionsgeber (113) zum Erfassen einer aktuellen Position;
einer Wegsuchvorrichtung (116) zum Suchen eines Wegs von der durch den Positionsgeber (113) erfassten aktuellen Position zu einem Ziel; und
einer Navigationskarten-Erzeugungseinheit (117) zum Erzeugen eines Navigationsbilds unter Verwendung des von der Wegsuchvorrichtung (116) ermittelten Suchwegs;
wobei die Wegsuchvorrichtung (116), die Navigationskarten-Erzeugungseinheit (117) und die Kartenzusammenfassungsvorrichtung (118) in einer Steuerung (111) angeordnet sind;
wobei die Kartenzusammenfassungsvorrichtung (118) dazu angeordnet ist, das gemusterte Bodenobjekt zu erfassen, welches in dem Navigationsbild enthalten ist, das von der Navigationskarten-Erzeugungseinheit (117) erzeugt wird, und einen Mustereinfügungsvorgang auszuführen.

13. Kartenerzeugungsgerät nach Anspruch 12, wobei sich die Steuerung (111) einschließlich der Wegsuchvorrichtung (116), der Navigationskarten-Erzeugungsvorrichtung (117) und der Kartenzusammenfassungsvorrichtung (118) an einem entfernten Ort befindet und mit den anderen Einheiten des Kartenerzeugungsgeräts über ein Netz verbunden ist; und
wobei die Kartendaten, die eine von der Kartenzusammenfassungsvorrichtung (118) zusammengefasste Karte enthalten, über das Netz an die Kartenanzeigevorrichtung (115) übertragen werden.

## Revendications

1. Appareil de génération de cartes comportant
: un dispositif de mémoire (112) pour mémoriser des données de carte,
**caractérisé par**
un dispositif d'analyse de cartes (118) adapté pour extraire un objet au sol modélisé des données de carte et pour insérer un modèle mémorisé à l'avance dans les données de carte afin de remplacer l'objet au sol modélisé extrait,
dans lequel l'objet au sol modélisé est un objet ayant une forme caractéristique nécessitant une opération prédéterminée d'un conducteur et servant de point de repère, et
un afficheur de cartes (115) pour afficher les données de carte dans lesquelles le modèle a été inséré sur un écran unique.

2. Appareil de génération de cartes selon la revendication 1, dans lequel le dispositif d'analyse de cartes (118) est adapté pour effectuer l'insertion en utilisant un modèle correspondant à l'objet au sol modélisé extrait.

3. Appareil de génération de cartes selon la revendication 1 ou 2, dans lequel le dispositif d'analyse de cartes (118) est adapté pour calculer une similitude entre les données d'image d'un objet au sol modélisé et les données d'image modélisées et effectuer l'insertion en utilisant le modèle ayant la similitude la plus élevée.

4. Appareil de génération de cartes selon au moins l'une des revendications 1 à 3, dans lequel le dispositif d'analyse de cartes (118) est adapté pour calculer une échelle pour des points de décalage constituant l'objet au sol modélisé des données de carte sur le modèle à insérer et pour changer localement l'échelle des données de carte en utilisant l'échelle calculée lorsque l'insertion de modèle est effectuée.

5. Appareil de génération de cartes selon au moins l'une des revendications 1 à 4, dans lequel le dispositif d'analyse de cartes (118) est adapté pour calculer une échelle afin de faire en sorte que le modèle soit une figure inscrite de l'objet au sol modélisé et pour effectuer l'insertion en utilisant le modèle modifié selon l'échelle calculée.

6. Appareil de génération de cartes selon au moins l'une des revendications 1 à 5, dans lequel le dispositif d'analyse de cartes (118) est adapté pour déterminer si un modèle à insérer pour remplacer l'objet au sol modélisé extrait existe et n'effectue pas l'insertion de modèle si aucun modèle adapté à l'objet au sol modélisé n'existe.

7. Appareil de génération de cartes selon au moins l'une des revendications 1 à 6, dans lequel le dispositif d'analyse de cartes (118) est adapté pour exécuter, après l'extraction de l'objet au sol modélisé, un processus d'optimisation de forme de la route (515) pour les données de carte dans lesquelles le modèle a été inséré.

8. Appareil de génération selon au moins l'une des revendications 1 à 7, dans lequel lorsque un modèle à insérer pour remplacer l'objet au sol modélisé existe, le processus d'optimisation de forme de la route (515) limite la plage de décalage des points constituant l'objet au sol de forme modélisée sur le modèle et dessine une forme de route pour les données de carte dans lesquelles le modèle a été inséré.

9. Appareil de génération de cartes selon au moins l'une des revendications 1 à 8, comportant en outre une interface d'entrée pouvant recevoir une entrée des données d'image de modèle et un gabarit du modèle servant de candidat à insérer pour remplacer l'objet au sol modélisé et ajouter les données d'images de modèle et le modèle.

10. Appareil de génération de cartes selon au moins l'une des revendications 1 à 9, dans lequel l'objet au sol modélisé est au moins l'un d'un rond-point, d'une voie ferrée et d'une route annulaire, d'un chemin vicinal et d'une route en pente.

11. Appareil de génération de cartes selon au moins l'une des revendications 1 à 10, dans lequel lorsque l'objet au sol modélisé est un rond-point, une autre forme de circulation telle qu'un cercle, une ellipse ou un carré est utilisée en tant que modèle.

12. Appareil de génération de cartes selon la revendication 1, comportant en outre : un dispositif de localisation (113) pour acquérir une position courante,
un dispositif de recherche de trajet (116) pour rechercher un trajet à partir de la position courante acquise par le dispositif de localisation (113) jusqu'à une destination, et
une unité de génération de carte de navigation (117) pour générer une image de navigation en utilisant le trajet de recherche obtenu par le dispositif de recherche de trajet (116),
ledit dispositif de recherche de trajet (116), ladite unité de génération de carte de navigation (117) et ledit dispositif d'analyse de cartes (118) étant agencés dans un dispositif de commande (111),
dans lequel ledit dispositif d'analyse de cartes (118) est conçu pour détecter ledit objet au sol modélisé contenu dans l'image de navigation générée par l'unité de génération de carte de navigation (117) et pour exécuter un processus d'insertion de modèle.

13. Appareil de génération de cartes selon la revendication 12, dans lequel le dispositif de commande (111) incluant le dispositif de recherche de trajet (116), le générateur de carte de navigation (117) et le dispositif d'analyse de cartes (118) est localisé à un emplacement distant et est relié aux autres unités de l'appareil de génération de cartes via un réseau, et
dans lequel les données de carte contenant une carte analysée par le dispositif d'analyse de cartes (118) sont transmises à l'afficheur de carte (115) via le réseau.
